# FASCICULE DE BREVET EUROPEEN

(11) **EP 1 243 446 B1**
(45) Date de publication et mention de la délivrance du brevet: **15.07.2009**
(21) Numéro de dépôt: 02290640.8
(22) Date de dépôt: 14.03.2002
(51) Int. Cl.: B60G 15/06, F16C 33/76

(54) **Butée de suspension à moyens de retenue.**
Axialwälzlager für eine Fahrzeugaufhängung mit Rückhaltemittel
Axial rolling bearing for a vehicle suspension with restraining means

(30) Priorité: 21.03.2001 FR 0103827
(43) Date de publication de la demande: 25.09.2002
(73) Titulaire: Aktiebolaget SKF, 415 50 Göteborg (SE)
(72) Inventeur: Beghini, Eric, 37390 La Membrolle-sur-Choisille (FR); Houdayer, Christophe, 37000 Tours (FR)
(74) Mandataire: Casalonga, Axel

(56) Documents cités:
- EP-A- 0 561 704
- FR-A- 2 779 096
- US-A- 4 462 608
- US-A- 4 995 737

## Description

La présente invention concerne le domaine des butées de suspension utilisées en particulier sur les véhicules automobiles dans les jambes de suspension télescopiques des roues directrices.

Une butée de suspension comprend généralement une bague supérieure et une bague inférieure entre lesquelles sont disposés des éléments roulants, sous la forme de billes ou de rouleaux.

L'invention concerne plus particulièrement les butées de suspension comprenant au moins un capot en matière synthétique en contact avec l'une des deux bagues du roulement.

De façon connue en soi, la butée de suspension est disposée dans la partie supérieure de la jambe de suspension, entre une coupelle inférieure généralement métallique, servant également de siège d'appui pour un ressort de suspension, et un élément supérieur solidaire de la caisse du véhicule. Le ressort du dispositif de suspension est installé autour de la tige du piston d'amortisseur dont l'extrémité est solidaire d'un bloc-support élastique. Le roulement de butée de suspension permet un mouvement de rotation entre la coupelle d'appui du ressort, mobile en rotation, et le bloc-support élastique qui est fixé à la caisse du véhicule. La butée de suspension permet également de transmettre les efforts axiaux entre le ressort et la caisse du véhicule. Le mouvement angulaire relatif entre la coupelle d'appui du ressort et le bloc-support élastique découle d'un braquage de la roue directrice et/ou la compression du ressort de suspension. La bague supérieure du roulement peut être équipée d'une frette métallique repliée sur ladite bague et serrée sur ledit élément supérieur solidaire de la caisse du véhicule. On peut se référer au document français n° 2 665 494. Toutefois, le serrage de la frette dans le logement de l'élément supérieur est difficile à maîtriser du fait des tolérances de fabrication.

On peut utiliser de manière connue en soi, comme dans les documents US 4 995 737 ou EP-A-390 331, un dispositif utilisant un ou deux capots en matière synthétique, chaque capot venant coiffer une bague et possédant des moyens de retenue axiale coopérant avec l'autre capot. Les capots sont généralement réalisés en matière synthétique chargée de fibres de verre pour leur conférer la résistance et la rigidité nécessaires. L'utilisation des capots en matière synthétique permet de transmette et de répartir les efforts entre le roulement et les éléments adjacents. Ils permettent en outre de standardiser les dimensions des bagues des roulements, c'est à dire d'utiliser les mêmes bagues pour des applications différentes en modifiant seulement la géométrie externe des capots.

L'invention propose un roulement de butée de suspension adapté pour être facilement manipulé et transporté sans risque de perte accidentelle de l'un des composants, tout en formant un ensemble compact.

Le dispositif de roulement de butée de suspension, selon un aspect de l'invention, est du type comprenant une première bague, une deuxième bague, une rangée d'éléments roulants disposés entre les deux bagues, un premier capot en contact avec la première bague, et une première coupelle en contact avec le premier capot. Le premier capot comprend un moyen de retenue axiale avec la première coupelle, ledit moyen de retenue axiale étant monobloc avec le capot.

On constitue ainsi de façon simple un ensemble indémontable pendant les manipulations entre la butée de suspension et la coupelle supérieure, ce qui permet de manipuler, transporter et enfin monter aisément ce sous-ensemble sur le véhicule.

Dans un mode de réalisation de l'invention, le moyen de retenue axiale du premier capot comprend une lèvre annulaire emmanchée sur une surface extérieure cylindrique ou un alésage de la première coupelle.

Dans un autre mode de réalisation de l'invention, le moyen de retenue axiale du premier capot comprend une pluralité de languettes interférant avec une surface extérieure cylindrique ou un alésage de la première coupelle.

Avantageusement, le dispositif comprend un deuxième capot en contact avec la deuxième bague. Le premier capot comprend un moyen de solidarisation axiale avec le deuxième capot.

Dans un mode de réalisation de l'invention, le moyen de solidarisation axiale du premier capot avec le deuxième capot comprend une nervure annulaire, le deuxième capot étant équipé d'un moyen apte à coopérer avec la nervure, par exemple une autre nervure de forme complémentaire.

Dans un mode de réalisation de l'invention, le dispositif comprend un deuxième capot solidaire de la deuxième bague et une deuxième coupelle en contact avec le deuxième capot. Le deuxième capot comprend un moyen de solidarisation axiale avec la deuxième coupelle.

Dans un mode de réalisation de l'invention, le moyen de solidarisation axiale du deuxième capot avec la deuxième coupelle comprend une pluralité de crochets interférant avec une surface de la deuxième coupelle.

Avantageusement, les première et deuxième bagues sont réalisées en tôle mince. Les première et deuxième bagues peuvent consister en un simple anneau dont la section transversale est en arc de cercle.

On réalise un roulement de butée de suspension dont l'encombrement tant axial que radial n'est pas modifié par rapport aux roulements connus, et qui possède une excellente étanchéité et des moyens de retenue de ses différents éléments les uns avec les autres.

L'invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue en coupe axiale d'un roulement de butée de suspension à l'état monté;
- la figure 2 est une vue de détail de la figure 1;
- la figure 3 montre une variante de la figure 2;
- la figure 4 est une vue de dessus de détail de la figure 3:

- la figure 5 montre une variante de la figure 1; et
- la figure 6 est une vue de détail de la figure 5.

Un amortisseur comprend un cylindre dans lequel peut coulisser un piston dont la tige 1 est liée par son extrémité supérieure à un bloc-support élastique 2, solidaire d'une coupelle 4 fixée au châssis 3.

La coupelle supérieure 4 est fixée au châssis par l'intermédiaire de vis 5 pourvues de têtes 6 en contact avec la coupelle 4, passant dans des trous prévus dans ledit châssis et coopérant avec des écrous 7. La coupelle 4 est de forme annulaire et présente une portion radiale 4a en contact avec le châssis 3 et se terminant vers l'extérieur par un rebord axial sensiblement cylindrique. Une portion radiale 4b de diamètre inférieur à celui de la portion 4a est reliée à celle-ci par une portion oblique de façon telle que ladite portion radiale 4b soit espacée par rapport au châssis 3, en d'autres termes décalée axialement vers le bas. Une portion axiale cylindrique 4c est issue de l'extrémité de petit diamètre de la portion radiale 4b et est dirigée à l'opposé du châssis 3.

Le bloc support élastique 2, de forme générale annulaire est lié par surmoulage à la fois à la coupelle supérieure 4 et au manchon cylindrique 9 monté sur l'extrémité cylindrique 1a de la tige 1.

Le bloc-support élastique 2 est en contact avec la portion cylindrique 4c, la portion radiale 4b et en partie avec la portion oblique séparant les portions radiales 4a et 4b. Le bloc-support élastique 2 est en contact d'autre part avec une partie de la surface cylindrique extérieure 9a du manchon 9.

L'extrémité supérieure de la tige 1 du piston est pourvue d'une portion 1a de diamètre réduit par rapport au reste de la tige 1 dont elle est séparée par une surface radiale annulaire 1b. Une rondelle de butée 8 présentant une forme de coupelle annulaire est montée autour de l'extrémité 1a de la tige 1 du côté du cylindre d'amortisseur, et en contact avec la surface radiale 1b. La rondelle de butée sert d'appui pour un tampon élastique (non représenté) servant de butée de fin de course lors des débattements extrêmes et exceptionnels de la suspension. Au-dessus du manchon 9, est prévu une coupelle 10 de forme générale tronconique, une rondelle 11 et un écrou 12 venant coopérer avec une portion filetée de l'extrémité supérieure 1a pour maintenir ensemble la rondelle de butée 8, le manchon 9 et la coupelle 10.

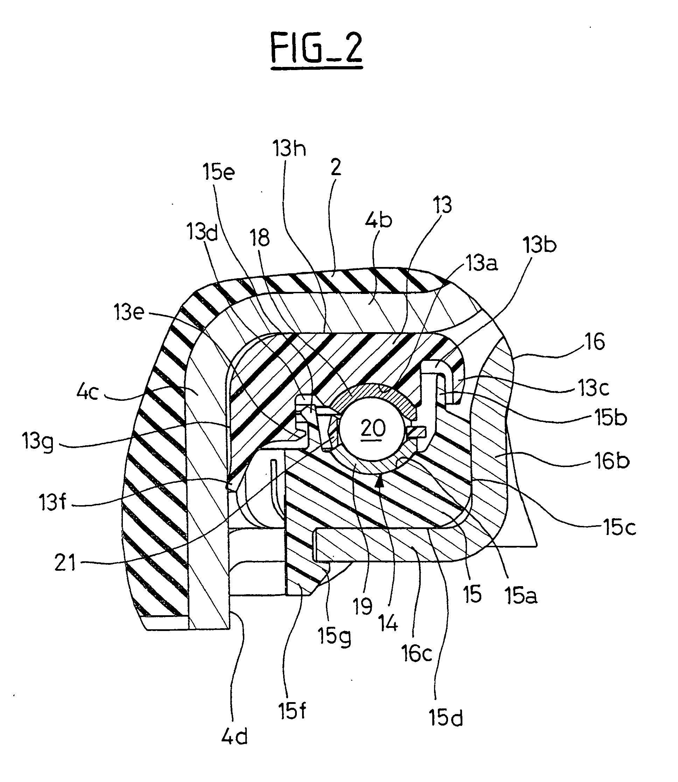

Il est encore prévu un capot supérieur 13, un roulement de butée 14, un capot inférieur 15, ces éléments étant mieux visibles sur la figure 2, un coupelle inférieure 16 et un ressort de suspension 17 de type hélicoïdal.

La coupelle inférieure 16 est de forme annulaire et comprend une portion radiale ou légèrement tronconique 16a de grand diamètre offrant une surface de contact à l'extrémité supérieure du ressort 17, une portion intermédiaire sensiblement cylindrique 16b issue de l'extrémité de petit diamètre de la portion 16a et dirigée vers le bas, à l'opposé du châssis 3, et offrant une surface de centrage au ressort 17, et une autre portion radiale 16c se raccordant à la portion cylindrique 16b et dirigée vers l'intérieur. Les coupelles 4 et 16 seront généralement réalisées en tôle, tandis que les capots 13 et 15 seront généralement réalisés en matériau synthétique.

Le capot supérieur 13 est en contact avec la surface inférieure de la portion radiale 4b de la coupelle supérieure 4 ainsi qu'avec la surface cylindrique extérieure 4d de la portion cylindrique 4c de ladite coupelle 4. Plus particulièrement, le capot supérieur 13 présente une surface concave toroïdale 13a ouverte à l'opposé du châssis 3, puis radialement à l'extérieur de la surface concave 13a une rainure annulaire 13b limitée par un rebord axial 13c formé à l'extrémité de grand diamètre du capot 13, le rebord 13c s'étendant vers le bas, à l'opposé du châssis 3. Du côté opposé, le capot supérieur 13 présente une rainure 13d sensiblement adjacente à la surface concave 13a, puis une nervure annulaire 13e s'étendant radialement vers l'extérieur, et enfin une lèvre 13f oblique venant en contact avec la surface cylindrique 4d de la portion 4c de la coupelle supérieure 4. Le capot supérieur 13 et la coupelle supérieure 4 sont solidaires grâce à ladite lèvre 13f qui forme un moyen de retenue par serrage. On peut prévoir qu'à l'état libre, la lèvre 13f présente un diamètre légèrement inférieur au diamètre de la surface extérieure cylindrique 4d. Le capot 13 comprend un alésage 13g et une surface supérieure radiale 13h en contact avec la portion radiale 4b de la coupelle supérieure 4.

Le roulement 14 comprend une bague supérieure 18, en tôle mince, présentant une forme annulaire à section toroïdale. La bague supérieure 18 est en contact et en concordance de forme avec la surface concave toroïdale 13a du capot supérieur 13. Le roulement comprend encore une bague inférieure 19 de forme semblable à la bague supérieure 18, ce qui est particulièrement économique en ce sens que le roulement comprend deux bagues strictement identiques montées en vis-à-vis. Entre les bagues supérieure 18 et inférieure 19 est prévu une rangée d'éléments roulants 20, ici des billes, et une cage 21 de maintien de l'espacement circonférentiel des éléments roulants 20.

Le capot inférieur 15 comprend une surface concave toroïdale 15a de forme semblable à la surface correspondante 13a du capot supérieur 13 et en contact et en concordance de forme avec la bague inférieure 19 du roulement 14. Les capots supérieur 13 et inférieur 15 permettent de transmettre et de répartir les efforts entre les bagues du roulement 14 et les coupelles supérieure 4 et inférieure 16. Le capot 15 comprend également une nervure annulaire 15b s'étendant axialement vers le haut, c'est-à-dire en direction du châssis 3 et s'étendant dans la rainure 13b du capot supérieur 13 en entourant ainsi le roulement 14, puis une surface cylindrique extérieure 15c en contact avec la portion cylindrique 16b de la coupelle inférieure 16, et une surface inférieure radiale 15d en contact avec la portion radiale 16c de la coupelle inférieure 16. Il est encore prévu une nervure annulaire 15e s'étendant axialement vers le haut et radialement légèrement vers l'intérieur, présentant un diamètre inférieur à celui du roulement 14 et disposée en saillie dans la rainure 13d du capot supérieur 13 et apte à interférer diamétralement avec la nervure 13e de façon que les nervures 13e et 15e assurent la retenue mutuelle dans le sens axial du capot supérieur 13 et du capot inférieur 15.

En d'autres termes, la nervure 15e s'étend également radialement légèrement vers l'intérieur pour pouvoir présenter ladite interférence diamétrale avec la nervure 13e. Le capot inférieur 15 se complète par une pluralité de crochets 15f s'étendant axialement vers le bas et comprenant une extrémité 15g apte à venir interférer avec l'extrémité libre de petit diamètre de la portion radiale 16c de la coupelle inférieure 16 pour assurer la solidarisation axiale du capot inférieur 15 et de la coupelle inférieure 16.

Le rebord axial 13c et la nervure annulaire 15b forment une étanchéité par chicane empêchant la pénétration d'eau ou d'éléments polluants dans la butée de suspension. Il en est de même de la nervure 13e qui forme une étanchéité par chicane avec la nervure 15e.

En outre, la surface cylindrique extérieure 15c du capot inférieur 15 pourra être munie d'un bourrelet annulaire s'étendant vers l'extérieur et présentant à l'état libre un diamètre supérieur à celui de l'alésage de la portion cylindrique 16b de la coupelle inférieure 16 pour assurer outre l'accrochage par les crochets 15f, un emmanchement et un centrage par contact entre le bourrelet et l'alésage de ladite portion cylindrique 16b de la coupelle inférieure 16.

Ainsi, le roulement 14 équipé des capots supérieur 13 et inférieur 15 forme un sous-ensemble apte à ne pas perdre de pièces accidentellement grâce à la solidarisation axiale assurée par l'interférence diamétrale entre la nervure 15e du capot inférieur 15 et la nervure 13e du capot supérieur 13. Ledit sous-ensemble complété par la coupelle inférieure 16 est là encore apte à ne pas perdre de pièces grâce à la solidarisation axiale et radiale assurée à la fois par les crochets 15f du capot inférieur 15 venant coopérer avec la surface inférieure de la portion radiale 16c de la coupelle inférieure 16 et grâce au bourrelet 15h en contact avec l'alésage de la portion cylindrique 16b de la coupelle inférieure 16.

Enfin, le sous-ensemble formé par le roulement 14 et les capots supérieur 13 et inférieur 15, et éventuellement la coupelle inférieure 16, forme une fois monté dans la coupelle supérieure 4, un ensemble apte à ne pas perdre de pièces lors des manipulations précédant le montage définitif. La coupelle supérieure 4 et le manchon 9 seront solidaires du bloc-support élastique 2 qui pourra être adhérisé par surmoulage à la fois sur ladite coupelle supérieure 4 et sur le manchon 9 disposé à l'intérieur du bloc-support élastique 2.

L'invention permet donc d'obtenir un ensemble complet comprenant la butée, la coupelle supérieure et la coupelle inférieure servant d'appui au ressort, afin de pouvoir manipuler, transporter et enfin monter aisément ledit ensemble sur le véhicule.

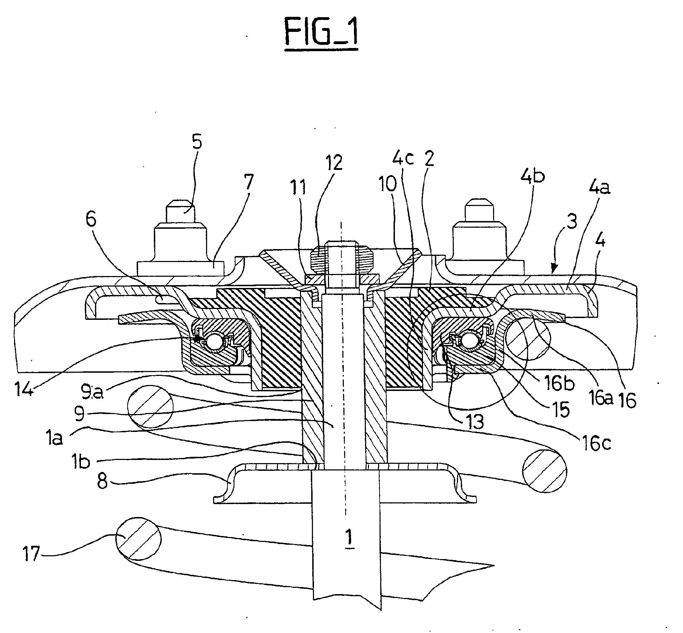

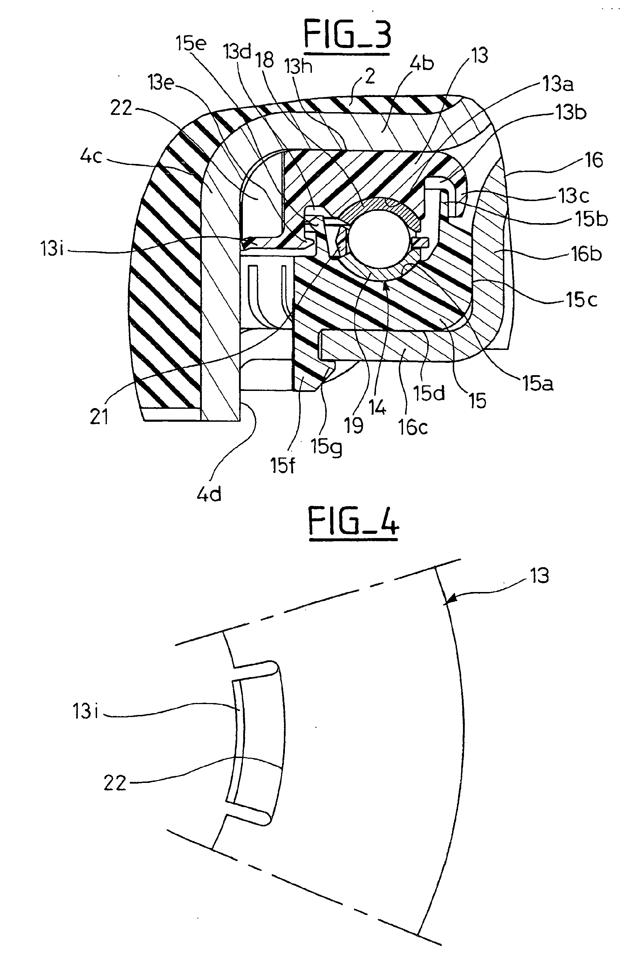

Le mode de réalisation illustré sur les figures 3 et 4 est semblable à celui des figures 1 et 2, à ceci près que la lèvre 13f du capot 13 est remplacée par une rangée de languettes 13i disposées de façon circulaire et s'étendant radialement vers l'intérieur pour venir en contact avec la surface extérieure cylindrique 4d de la portion cylindrique 4c de la coupelle supérieure 4. Un dégagement 22 peut être prévu au-dessus de chaque languette 13i. Les languettes 13i sont légèrement inclinées vers le bas, de telle sorte qu'elles puissent fléchir lorsqu'on introduit le capot supérieur 13 sur la coupelle supérieure 4 et que lesdites languettes 13i s'arc-boutent sur la coupelle 4 dans le sens inverse, interdisant ainsi toute désolidarisation axiale du capot supérieur 13 et de la coupelle supérieure 4.

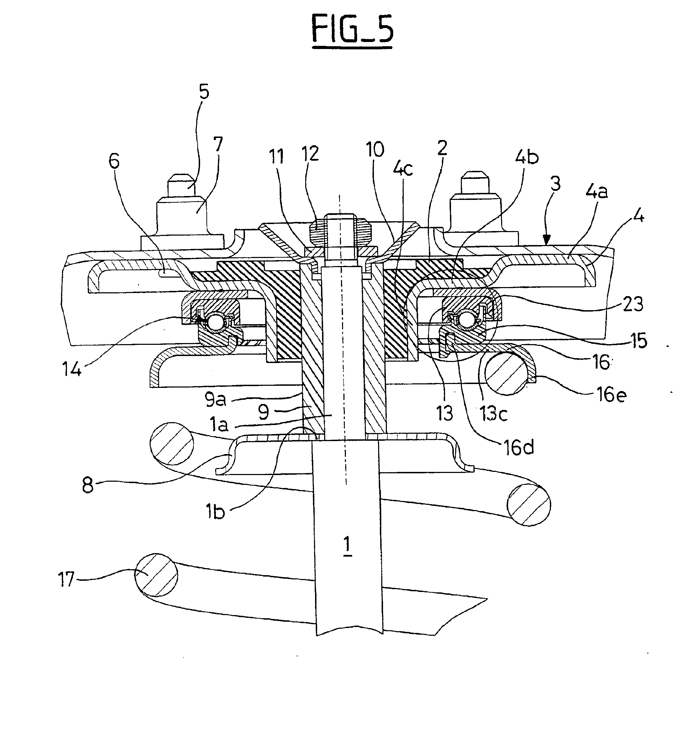

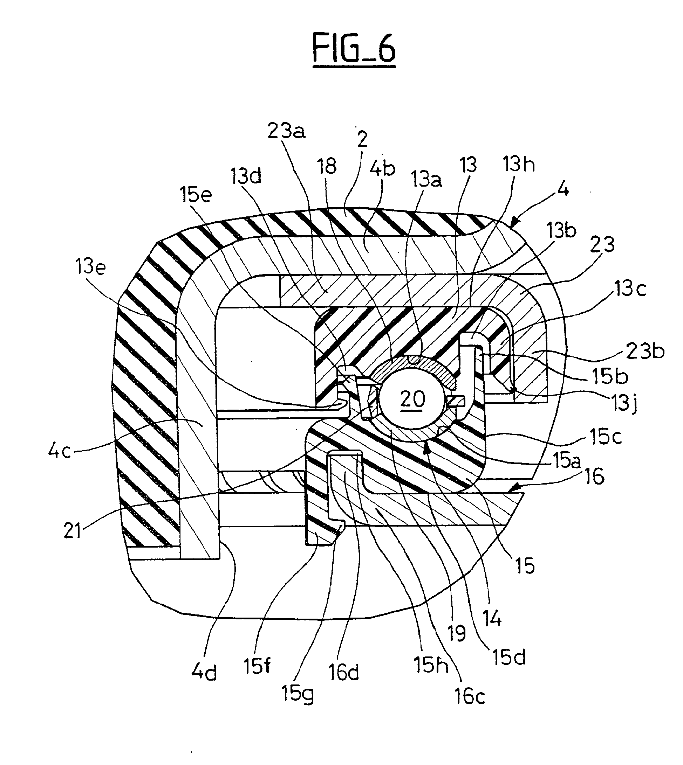

Dans le mode de réalisation illustré sur les figures 5 et 6, la coupelle supérieure 4 comprend en outre un élément intermédiaire 23, de forme annulaire, par exemple en tôle, fixé sur la portion radiale 4b, par exemple par soudure, et présentant une section en L avec une portion radiale 23a en contact avec la portion radiale 4b et une portion cylindrique 23b s'étendant axialement vers le bas à partir de l'extrémité de grand diamètre de la portion radiale 23a. Le rebord 13c du capot supérieur 13 comprend à son extrémité libre inférieure une lèvre annulaire 13j en contact avec l'alésage de la portion cylindrique 23b de l'élément 23 de la coupelle supérieure 4. La surface supérieure 13h du capot supérieur 13 est en contact avec la portion radiale 23a de l'élément 23. La solidarisation axiale entre ces éléments est assurée par le contact de la lèvre 13j sur l'alésage de la portion cylindrique 23b.

La coupelle inférieure 16 comprend ici un rebord cylindrique 16d dirigé vers le haut et s'étendant à partir de l'extrémité de petit diamètre de la portion radiale 16c en étant disposé dans une rainure 15h du capot inférieur 15. La rainure 15h étant positionnée radialement entre les crochets 15f et la surface radiale 15d. Une portion cylindrique 16e s'étend vers le bas à partir de l'extrémité du grand diamètre de la portion radiale 16c. Le ressort 17 est en appui sur la portion radiale 16c et est centré par la portion cylindrique 16e.

Grâce à l'invention, on dispose d'un ensemble complet comprenant la butée, c'est-à-dire le roulement 14 et les capots supérieur 13 et inférieur 15, la coupelle inférieure 15 et un bloc supérieur formé par la coupelle supérieure 4, équipée ou non de l'élément supplémentaire 23, et le bloc de support élastique 2.

## Revendications

1. Dispositif de roulement de butée de suspension, du type comprenant une première bague (18), une deuxième bague (19), une rangée d'éléments roulants (20) disposés entre les deux bagues, un capot supérieur (13) en contact avec la première bague, une coupelle supérieure (4) en contact avec le capot supérieur, un capot inférieur en contact avec la deuxième bague et une coupelle inférieure (16) en contact avec le capot inférieur, **caractérisé par le fait que** le capot supérieur (13) comprend un moyen de retenue axiale avec la coupelle supérieure (4), ledit moyen de retenue axiale étant monobloc avec le capot supérieur (13) et venant en contact avec une portion axiale (4c, 23b) de la coupelle supérieure (4) ou d'une pièce (23) fixée sur ladite coupelle supérieure (4).

2. Dispositif selon la revendication 1, **caractérisé par le fait que** le moyen de retenue axiale du capot supérieur comprend une lèvre annulaire (13f) emmanchée sur une surface extérieure cylindrique (4d) ou un alésage de la coupelle supérieure.

3. Dispositif selon la revendication 1, **caractérisé par le fait que** le moyen de retenue axiale du capot supérieur comprend une pluralité de languettes (13i) interférant avec une surface extérieure cylindrique ou à un alésage de la coupelle supérieure.

4. dispositif selon l'une quelconque des revendications précédentes, **caractérisé par le fait que** le capot supérieur comprend un moyen de solidarisation axiale avec le capot inférieur.

5. Dispositif selon la revendication 4, **caractérisé par le fait que** le moyen de solidarisation axiale du capot supérieur avec le capot inférieur comprend une nervure annulaire (13e), le capot inférieur étant équipé d'un moyen apte à coopérer avec la nervure.

6. Dispositif selon l'une quelconque des revendications précédentes, **caractérisé par le fait que** le capot inférieur comprend un moyen de solidarisation axiale avec la coupelle inférieure.

7. Dispositif selon la revendication 6, **caractérisé par le fait que** le moyen de solidarisation axiale du capot inférieur avec la coupelle inférieure comprend une pluralité de crochets (15f) interférant avec une surface de la coupelle inférieure.

8. Dispositif selon l'une quelconque des revendications précédentes **caractérisé par le fait que** les capots inférieur et supérieur comportent des moyens formant une étanchéité par chicane.

9. Dispositif selon la revendication 8 **caractérisé par le fait que** les moyens d'étanchéité par chicane comprennent un rebord axial (13c) du capot supérieur (13) et une nervure annulaire (15b) du capot inférieur (15).

10. Dispositif selon l'une quelconque des revendications précédentes, **caractérisé par le fait que** les première et deuxième bagues sont réalisées en tôle mince.

## Claims

1. Suspension thrust bearing including a first race (18), a second race (19), a row of rolling elements (20) disposed between the two races, a top cover (13) in contact with the first race, a top cup (4) in contact with the top cover, a bottom cover in contact with the second race and a bottom cup (16) in contact with the bottom cover, **characterized in that** the top cover (13) includes axial retention means for retaining the top cup (4), said axial retention means being integral with the top cover (13) and coming into contact with an axial portion (4c, 23b) of the top cup (4) or of a piece (23) fixed on said top cup (4).

2. Bearing according to Claim 1, **characterized in that** the axial retention means of the top cover include an annular lip (13f) force-fitted over a cylindrical outside surface (4d) or a bore of the top cup.

3. Bearing according to Claim 1, **characterized in that** the axial retention means of the top cover include a plurality of tongues (13i) interfering with a cylindrical outside surface or a bore of the top cup.

4. Bearing according to any one of the preceding claims, **characterized in that** the top cover includes axial fastening means for fastening it to the bottom cover.

5. Bearing according to Claim 4, **characterized in that** the axial fastening means of the top cover for fastening it to the bottom cover include an annular rib (13e) and the bottom cover is equipped with means adapted to cooperate with the rib.

6. Bearing according to any preceding claim, **characterized in that** the bottom cover includes axial fastening means for fastening it to the bottom cup.

7. Bearing according to Claim 6, **characterized in that** the axial fastening means of the bottom cover for fastening it to the bottom cup include a plurality of hooks (15f) interfering with a surface of the bottom cup.

8. Bearing according to any one of the preceding claims, **characterized in that** the bottom and top covers comprise means forming a chicane seal.

9. Bearing according to Claim 8, **characterized in that** the chicane seal means comprise an axial rim (13c) of the top cover (13) and an annular rib (15b) of the bottom cover (15).

10. Bearing according to any preceding claim, **characterized in that** the first and second races are made of thin sheet metal.

## Patentansprüche

1. Wälzlagervorrichtung einer Federbeinlagerung von dem Typ, die einen ersten Ring (18), einen zweiten Ring (19), eine Reihe von Wälzelementen (20), die zwischen den zwei Ringen angeordnet sind, eine obere Kappe (13) in Kontakt mit dem ersten Ring, eine obere Schale (4) in Kontakt mit der oberen Kappe, eine untere Kappe in Kontakt mit dem zweiten Ring und eine untere Schale (16) in Kontakt mit der unteren Kappe aufweist, **dadurch gekennzeichnet, dass** die obere Kappe (13) ein axiales Rückhaltemittel mit der oberen Schale (4) aufweist, wobei das axiale Rückhaltemittel aus einem Stück mit der oberen Kappe (13) besteht und mit einem axialen Abschnitt (4c, 23b) der oberen Schale (4) oder eines an der oberen Schale (4) befestigten Bauteils (23) in Kontakt kommt.

2. Vorrichtung nach Anspruch 1, **dadurch gekennzeichnet, dass** das axiale Rückhaltemittel der oberen Kappe eine ringförmige Lippe (13f) aufweist, die in eine zylindrische Außenfläche (4d) oder eine Bohrung der oberen Schale eingepasst wird.

3. Vorrichtung nach Anspruch 1, **dadurch gekennzeichnet, dass** das axiale Rückhaltemittel der oberen Kappe mehrere Zungen (13i) aufweist, die mit einer äußeren zylindrischen Fläche oder einer Bohrung der oberen Schale in Berührung kommen.

4. Vorrichtung nach einem der vorhergehenden Ansprüche, **dadurch gekennzeichnet, dass** die obere Kappe ein Mittel zur festen axialen Verbindung mit der unteren Kappe aufweist.

5. Vorrichtung nach Anspruch 4, **dadurch gekennzeichnet, dass** das Mittel zur festen axialen Verbindung der oberen Kappe mit der unteren Kappe eine ringförmige Rippe (13e) aufweist, wobei die untere Kappe mit einem Mittel ausgestattet ist, das mit der Rippe zusammenwirken kann.

6. Vorrichtung nach einem der vorhergehenden Ansprüche, **dadurch gekennzeichnet, dass** die untere Kappe ein Mittel zur festen axialen Verbindung mit der unteren Schale aufweist.

7. Vorrichtung nach Anspruch 6, **dadurch gekennzeichnet, dass** das Mittel zur festen axialen Verbindung der unteren Kappe mit der unteren Schale mehrere Haken (15f) aufweist, die mit einer Fläche der unteren Schale in Berührung kommen.

8. Vorrichtung nach einem der vorhergehenden Ansprüche, **dadurch gekennzeichnet, dass** die untere und die obere Kappe Mittel aufweisen, die eine Labyrinthdichtung bilden.

9. Vorrichtung nach Anspruch 8, **dadurch gekennzeichnet, dass** die Labyrinth-Dichtmittel eine axiale Randleiste (13c) der oberen Kappe (13) und eine ringförmige Rippe (15b) der unteren Kappe (15) enthalten.

10. Vorrichtung nach einem der vorhergehenden Ansprüche, **dadurch gekennzeichnet, dass** der erste und der zweite Ring aus dünnem Blech hergestellt sind.
